# EUROPEAN PATENT APPLICATION

(11) **EP 4 071 898 A1**
(43) Date of publication of application: **12.10.2022**
(21) Application number: 21841540.4
(22) Date of filing: 15.07.2021
(51) Int. Cl.: H01M 50/166, H01M 50/109, H01M 50/56, H01M 50/183, H01M 10/48, H01M 10/04

(54) **BUTTON-TYPE SECONDARY BATTERY AND METHOD FOR MANUFACTURING SAME**

(30) Priority: 17.07.2020 KR 20200089212
(71) Applicant: LG Energy Solution, Ltd., Seoul 07335 (KR)
(72) Inventor: KIM, Min Gyu, Daejeon 34122 (KR); SUNG, Joo Hwan, Daejeon 34122 (KR); LEE, Yong Gon, Daejeon 34122 (KR); CHO, Min Su, Daejeon 34122 (KR); CHAE, Sang Hak, Daejeon 34122 (KR)
(74) Representative: Plasseraud IP
(86) International application number: PCT/KR2021/009144
(87) International publication number: WO 2022/015092

(57) **Abstract**

The present invention relates to a button-type secondary battery comprising: a can assembly configured to accommodate an electrode assembly and an electrolyte, wherein the can assembly comprises: a lower can configured to accommodate the electrode assembly and the electrolyte and serve as a first electrode terminal; an upper can coupled to surround the lower can and configured to serve as a second electrode terminal; and a gasket provided between the lower can and the upper can to seal a gap between the lower can and the upper can, wherein a first leakage detection member configured to detect whether the electrolyte leaks is provided on an outer surface of the lower can that is in close contact with the gasket, and the first leakage detection member is provided with a recessed lower coupling groove formed in the outer surface of the lower can.

## Description

### CROSS-REFERENCE TO RELATED APPLICATION

The present application claims the benefit of the priority of Korean Patent Application No. 10-2020-0089212, filed on July 17, 2020, which is hereby incorporated by reference in its entirety.

### TECHNICAL FIELD

The present invention relates to a button-type secondary battery capable of increasing in adhesion and sealing force of a gasket and checking whether an electrolyte leaks, and a method for manufacturing the same.

### BACKGROUND ART

In general, secondary batteries refer to chargeable and dischargeable, unlike primary batteries that are not chargeable. The secondary batteries are being widely used for mobile phones, notebook computers, and camcorders, electric vehicles, and the like.

The secondary battery comprises a button-type secondary battery having high energy density, high output, and long lifespan. The button-type secondary battery comprises an electrode assembly, a lower can accommodating the electrode assembly, an upper can coupled to the lower can, and a gasket sealing the lower can and the upper can.

However, the button-type secondary battery has a problem in that possibility of leakage of the electrolyte is induced when adhesion strength of the gasket is weakened, and in particular, whether an electrolyte leaks is not quickly detected.

### DISCLOSURE OF THE INVENTION

### TECHNICAL PROBLEM

The present invention is invented to solve the above problems, and an object of the present invention is to provide a button-type secondary battery capable of increasing in adhesion and sealing force of a gasket, and simultaneously, capable of quickly detecting whether an electrolyte leaks, and a method for manufacturing the same.

### TECHNICAL SOLUTION

A button-type secondary battery according to the present invention comprises: a can assembly configured to accommodate an electrode assembly and an electrolyte, wherein the can assembly comprises: a lower can configured to accommodate the electrode assembly and the electrolyte and serve as a first electrode terminal; an upper can coupled to surround the lower can and configured to serve as a second electrode terminal; and a gasket provided between the lower can and the upper can to seal a gap between the lower can and the upper can, wherein a first leakage detection member configured to detect whether the electrolyte leaks is provided on an outer surface of the lower can that is in close contact with the gasket, and the first leakage detection member is provided with a recessed lower coupling groove formed in the outer surface of the lower can.

The first leakage detection member may be provided in the lower coupling groove and comprise a first leakage detection material configured to detect leakage of the electrolyte passing between the gasket and the lower coupling groove of the lower can and a first adhesive material configured to allow the first leakage detection material to adhere to the lower coupling groove so as to fix the first leakage detection material.

A second leakage detection member may be provided on an end of an inner surface of the upper can that is in close contact with the gasket, and the second leakage detection member may be provided with a recessed upper coupling groove formed in the end of the inner surface of the upper can.

The second leakage detection member may be provided in the upper coupling groove and comprise a second leakage detection material configured to detect leakage of the electrolyte passing between the gasket and the upper coupling groove of the upper can and a second adhesive material configured to allow the second leakage detection material to adhere to the upper coupling groove so as to fix the second leakage detection material.

The first leakage detection material and the gasket or the second leakage detection material and the gasket may be heated to a set temperature and thermally fused to be integrated with each other.

The upper coupling groove may be provided to be opened in a direction the end of the upper can so that a portion of the second leakage detection material provided in the upper coupling groove is exposed to the outside.

A recessed lower insertion groove and a recessed upper insertion groove may be formed in a surface of the lower can and a surface of the upper can, which are in close contact with the gasket, respectively, and the lower insertion groove and the upper insertion groove may be spaced apart from each other so as not to face each other.

A portion of the gasket may be introduced into each of the lower insertion groove and the upper insertion groove by clamping of the lower can and the upper can to form a lower insertion protrusion and an upper insertion protrusion on a surface of the gasket, a contact area between the lower can and the gasket may increase by the lower insertion protrusion, and a contact area between the upper can and the gasket may increase by the upper insertion protrusion.

A method for manufacturing a button-type secondary battery according to the present invention comprises: a preparation process of preparing a lower can, in which a recessed lower coupling groove is formed, an upper can, in which a recessed upper coupling groove is formed, and a gasket disposed between the lower can and the upper can, wherein the lower coupling groove is formed in an outer surface of the lower can that is in close contact with the gasket, and the upper coupling groove is formed in an end of an inner surface of the upper can that is in close contact with the gasket; an insertion process of inserting a first leakage detection member into the lower coupling groove and a second leakage detection member into the upper coupling groove; an accommodation process of accommodating an electrode assembly and an electrolyte in the lower can; a disposition process of disposing the gasket on an upper portion of the lower can, wherein the gasket comprises an outer part supported on an outer circumferential surface of the lower can, an inner part supported on an inner circumferential surface of the lower can, and a connection part connecting the outer part to the inner part; and a clamping process of disposing the upper can on the lower can to clamp the lower can and the upper can, thereby manufacturing the button-type secondary battery, wherein, in the clamping process, the first leakage detection member and the second leakage detection member are in close contact with both surfaces of the gasket by the clamping of the lower can and the upper can, respectively.

In the insertion process, the first leakage detection member may comprise a first leakage detection material detecting leakage of the electrolyte passing between the gasket and the lower coupling groove of the lower can and a first adhesive material allowing the first leakage detection material to adhere to the lower coupling groove to fix the first leakage detection material, and the second leakage detection member may be provided in the upper coupling groove and comprise a second leakage detection material detecting leakage of the electrolyte passing between the gasket and the upper coupling groove of the upper can and a second adhesive material allowing the second leakage detection material to adhere to the upper coupling groove to fix the second leakage detection material.

The method may further comprise, after the clamping process, a thermal fusion process of applying heat having a set temperature to an outer circumferential surface of the button-type secondary battery to thermally fuse the first leakage detection material and the gasket or the second leakage detection material and the gasket so as to be integrated with each other.

### ADVANTAGEOUS EFFECTS

The button-type secondary battery according to the present invention may comprise the lower can, the upper can, and the gasket. The recessed lower coupling groove may be formed in the lower can that is in close contact with the gasket, and the first leakage detection member that detects whether the electrolyte leaks may be provided in the lower coupling groove. Therefore, the adhesion strength of the gasket may increase through the adhesion between the gasket and the first leakage detection member, and when the electrolyte leaking between the gasket and the lower can is in contact with the first leakage detection member, the first leakage detection member may be discolored, and thus, whether the electrolyte leaks may be quickly detected from the outside.

In addition, in the button-type secondary battery according to the present invention, the first leakage detection member may comprise the first leakage detection material and the first adhesive material. Therefore, the leakage of the electrolyte passing between the gasket and the lower coupling groove of the lower can may be detected, and the fixing force of the first leakage detection member provided in the lower coupling groove may increase.

In addition, the button-type secondary battery according to the present invention, the recessed upper coupling groove may be formed in the inner surface of the end of the upper can, and the second leakage detection member that detects whether the electrolyte leaks may be provided in the upper coupling groove. Therefore, the adhesion strength of the gasket may increase through the adhesion between the gasket and the second leakage detection member, and when the electrolyte leaking between the gasket and the upper can is in contact with the second leakage detection member, the second leakage detection member may be discolored, and thus, whether the electrolyte leaks may be quickly detected from the outside.

In addition, in the button-type secondary battery according to the present invention, the second leakage detection member may comprise the second leakage detection material and the second adhesive material. Therefore, the leakage of the electrolyte passing between the gasket and the upper coupling groove may be detected, and the fixing force of the second leakage detection member provided in the upper coupling groove may increase.

In addition, in the button-type secondary battery according to the present invention, the first leakage detection material and the gasket or the second leakage detection material and the gasket may be thermally fused to be integrated with each other while being heated to the set temperature. Therefore, the adhesion strength of the gasket may increase.

In addition, in the button-type secondary battery according to the present invention, the upper coupling groove may be provided to be opened in the direction of the end of the upper can. Therefore, a portion of the second leakage detection material provided in the upper coupling groove may be exposed to the outside, and as a result, whether the electrolyte leaks may be easily checked.

In addition, in the button-type secondary battery of the present invention, the recessed lower insertion groove and the recessed upper insertion groove may be formed in the lower can and the upper can, which are in close contact with the gasket, respectively. Here, the lower insertion groove and the upper insertion groove may be disposed to be spaced apart from each other so as not to face each other. Therefore, when the lower can and the upper can are clamped, a portion of the gasket may be introduced into each of the lower insertion groove and the upper insertion groove to form each of the lower insertion protrusion and the upper insertion protrusion on the surface of the gasket, thereby increasing in adhesion force and coupling force between the lower can and the upper can by the lower and upper insertion protrusions.

### BRIEF DESCRIPTION OF THE DRAWINGS

FIG. 1 is a cross-sectional view of a button-type secondary battery according to a first embodiment of the present invention.
FIG. 2 is an exploded perspective illustrating a can assembly of the button-type secondary battery according to the first embodiment of the present invention.
FIG. 3 is an enlarged view of a portion A of FIG. 1.
FIG. 4 is a flowchart illustrating a method for manufacturing a button-type secondary battery according to the first embodiment of the present invention.
FIG. 5 is a cross-sectional view illustrating a preparation process in the method for manufacturing the button-type secondary battery according to the first embodiment of the present invention.
FIG. 6 is a cross-sectional view illustrating an insertion process in the method for manufacturing the button-type secondary battery according to the first embodiment of the present invention.
FIG. 7 is a cross-sectional view illustrating an accommodation process in the method for manufacturing the button-type secondary battery according to the first embodiment of the present invention.
FIG. 8 is a cross-sectional view illustrating a clamping process in the method for manufacturing the button-type secondary battery according to the first embodiment of the present invention.
FIG. 9 is a cross-sectional view of a button-type secondary battery according to a second embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Button-type secondary battery according to first embodiment of the present invention]

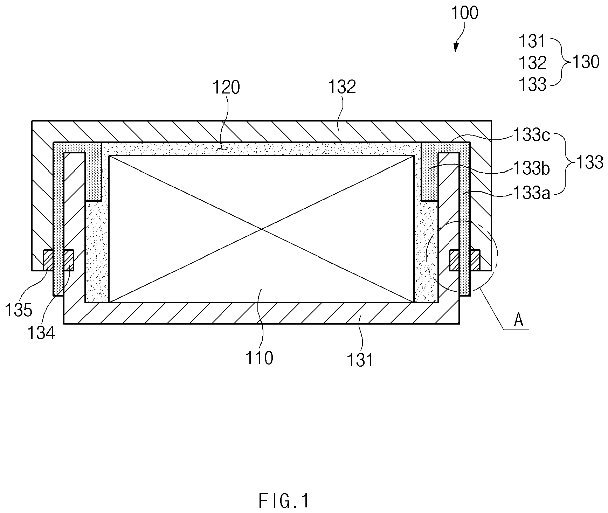

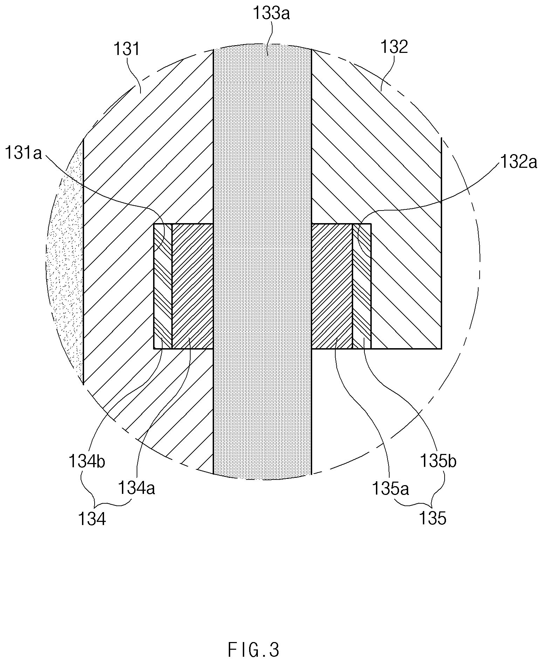

As illustrated in FIGS. 1 to 3, a button-type secondary battery 100 according to a first embodiment of the present invention comprises an electrode assembly 110, an electrolyte 120 impregnated into the electrode assembly 110, and a can assembly 130 accommodating the electrode assembly 110 and the electrolyte 120.

The can assembly 130 comprises a lower can 131 accommodating the electrode assembly 110 and the electrolyte 120 and serving as a first electrode terminal, an upper can 131 coupled to surround the lower can 131 and serving as a second electrode terminal, and a gasket 133 provided between the lower can 131 and the upper can 132 to seal a gap between the lower can 131 and the upper can 132.

The can assembly 130 has a structure capable of increasing in adhesion strength of the gasket 133 and checking whether the electrolyte 120 leaks.

That is, the can assembly 130 comprises a recessed lower coupling groove 131a formed in an outer circumferential surface of the lower can 131 that is in close contact with the gasket 133 and a first leakage detection member 134 provided in the lower coupling groove 131a to detect whether the electrolyte leaks.

Here, the lower coupling groove 131a may be provided in a surface of the lower can 131 disposed at an end of the upper can 132. Thus, a portion of the first leakage detection member 134 provided in the lower coupling groove 131a may be exposed (i.e., may be identified) to the outside through the transparent gasket 133, and as a result, when the electrolyte is in contact with the first leakage detection member, the first leakage detection member may be discolored to quickly detect whether the electrolyte leaks (i.e., whether the first leakage detection is discolored may be checked from the outside through the transparent gasket, and as a result, whether the electrolyte leaks may be checked).

That is, the first leakage detection member 134 is provided in the lower coupling groove 131a and comprises a first leakage detection material 134a detecting leakage of the electrolyte 120 passing between the gasket 133 and the lower coupling groove 131a of the lower can 131 and a first adhesive material 134b allowing the first leakage detection material 134a to adhere to the lower coupling groove 131a to fix the first leakage detection material 134a.

Here, the first leakage detection material 134a is made of one or more compounds selected from the group consisting of thymol blue, methyl orange, methyl red, and phenol red.

Thus, the can assembly 130 may allow adhesion and sealing force of the gasket 133 to increase due to adhesion between the gasket 133 and the first leakage detection member 134. Particularly, in the can assembly 130, when the electrolyte 120 leaking between the gasket 133 and the lower coupling groove 131a is in contact with the first leakage detection member 134, the first leakage detection member may be discolored (that is, a change in color occurs due to a change in concentration), and as a result, whether the electrolyte leaks may be quickly checked from the outside.

Particularly, in the first leakage detection member 134, the first leakage detection material 134a may adhere to the lower coupling groove 131a by the first adhesive material 134b to stably fix the first leakage detection material 134a. The first adhesive material is made of at least one selected from the group consisting of a polyester resin, an epoxy resin, a phenol resin, polyvinyl acetate, polyvinyl butyral, and polyacrylic acid ester.

The can assembly 130 further comprises a structure for detecting the leakage of the electrolyte between the gasket 133 and the upper can 132.

That is, the can assembly 130 corresponds to the lower coupling groove 131a and comprises a recessed upper coupling groove 132a formed in an end of an inner surface of the upper can 132 that is in close contact with the gasket 133 and a second leakage detection member 135 provided in the upper coupling groove 132a to detect whether the electrolyte leaks.

That is, the second leakage detection member 135 is provided in the upper coupling groove 132a and comprises a second leakage detection material 135a detecting leakage of the electrolyte 120 passing between the gasket 133 and the upper coupling groove 132a of the upper can 132 and a second adhesive material 134b allowing the second leakage detection material 135a to adhere to the upper coupling groove 132a to fix the second leakage detection material 134a.

The second leakage detection material 135a is made of the same material as the first leakage detection material 134a. That is, the second leakage detection material 135a is made of one or more compounds selected from the group consisting of thymol blue, methyl orange, methyl red, and phenol red. In addition, the second adhesive material 135b is made of the same material as the first adhesive material and allows fixing force of the second leakage detection material 135a provided in the upper coupling groove 132a to increase.

The upper coupling groove 132a is provided to be opened in a direction of the end of the upper can 132 (a direction of a lower end of the upper can when viewed in FIG. 1) and thus exposes a portion of the second leakage detection material 135a provided in the upper coupling groove 132a. As a result, the change of the color of the second leakage detection material may be easily checked from the outside.

Thus, the can assembly 130 may allow the adhesion and sealing force of the gasket 133 to increase due to the adhesion between the gasket 133 and the second leakage detection member 135. Particularly, when the electrolyte 120 leaking between the gasket 133 and the upper coupling groove 132a is in contact with the second leakage detection member 135, the second leakage detection member 135 is discolored (the change in color due to the change in concentration occurs), and as a result, whether the electrolyte leaks may be quickly checked from the outside.

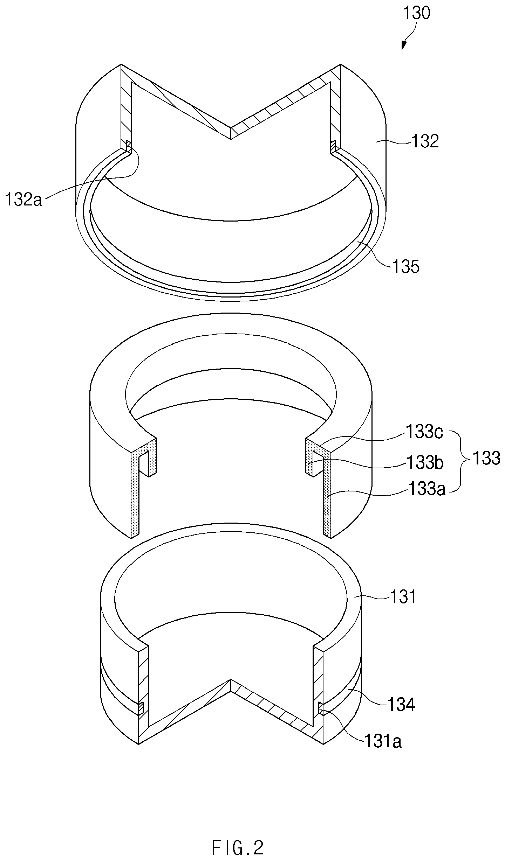

Referring to FIG. 2, each of the lower coupling groove and the upper coupling groove have a rectangular groove shape. This is done for increasing in coupling property between the lower coupling groove and the first leakage detection material and increasing coupling property between the upper coupling groove and the second leakage detection material.

The first leakage detection material 134a and the gasket 133 or the second leakage detection material 135a and the gasket 133 are heated at a set temperature and thus thermally fused to be integrated with each other, and thus, the gasket 133 may increase in adhesion strength.

The first leakage detection material 134a and the second leakage detection material 135a have the same height and the same thickness.

Here, the set temperature may be 240°C to 300°C, preferably 260°C to 280°C. That is, when the set temperature is 240°C or less, a contact surface between the first leakage detection material 134a and the gasket 133 or a contact surface between the second leakage detection material 135a and the gasket 133 is not melted to cause bonding defects, and when the set temperature is 300°C or more, the gasket may be excessively melted to cause a problem in sealing force. Thus, the set temperature may be 240°C to 300°C, preferably 260°C to 280°C so that the first leakage detection material 134a and the gasket 133 or the second leakage detection material 135a and the gasket 133 are stably melted and then thermally fused to be integrated with each other.

Therefore, the button-type secondary battery 100 according to the first embodiment of the present invention may comprise the first leakage detection member 134 and the second leakage detection member 135 to allow the adhesion strength between the can assembly and the gasket to increase, and also, quickly check whether the electrolyte 120 leaks between the gasket 133 and the can assembly.

Hereinafter, a method for manufacturing a button-type secondary battery according to a first embodiment of the present invention will be described.

### [Method for manufacturing button-type secondary battery according to first embodiment of the present invention]

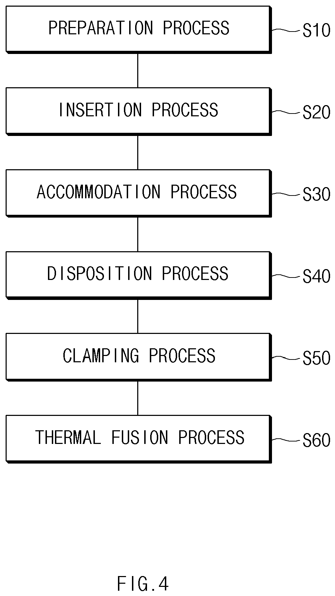

As illustrated in FIGS. 4 to 8, a method for manufacturing a button-type secondary battery according to the first embodiment of the present invention comprises a preparation process (S10), an insertion process (S20), an accommodation process (S30), a disposition process (S40), a clamping process (S50), and a thermal fusion process (S60).

### Preparation process

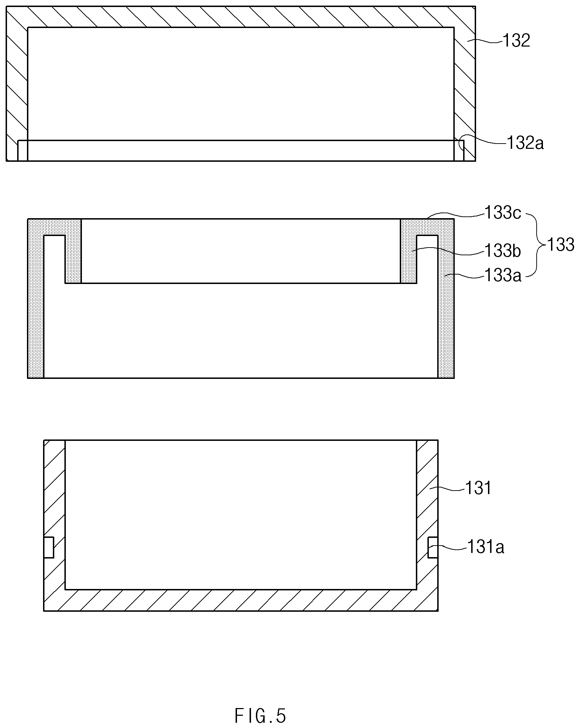

In the preparation process (S10), referring to FIG. 5, an electrode assembly 110, an electrolyte 120, and a can assembly 130 are prepared.

Here, the can assembly 130 comprises a lower can 131, an upper can 132, and a gasket 133. That is, the can assembly 130 prepares the lower can 131 in which a recessed lower coupling groove 131a is formed in an outer circumferential surface, at which an end of the upper can 132 is disposed, and prepares the upper can 132 in which a recessed upper coupling groove 132a is formed in an end of an inner circumferential surface to correspond to the lower coupling groove 131a, and then prepares a gasket 133 disposed between the lower can 131 and the upper can 132.

### Insertion process

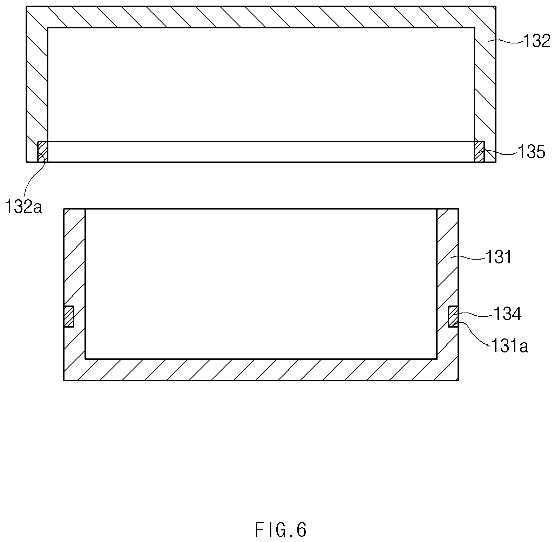

In the insertion process (S20), referring to FIG. 6, a first leakage detection member 134 is inserted into the lower coupling groove 131a, and a second leakage detection member 135 is inserted into the upper coupling groove 132a.

Here, the first leakage detection member 134 comprises a first leakage detection material 134a detecting leakage of the electrolyte 120 passing between the gasket 133 and the lower coupling groove 131a of the lower can 131 and a first adhesive material 134b allowing the first leakage detection material 134a to adhere to the lower coupling groove 131a to fix the first leakage detection material 134a.

That is, the second leakage detection member 135 is provided in the upper coupling groove 132a and comprises a second leakage detection material 135a detecting leakage of the electrolyte 120 passing between the gasket 133 and the upper coupling groove 132a of the upper can 132 and a second adhesive material 134b allowing the second leakage detection material 135a to adhere to the upper coupling groove 132a to fix the second leakage detection material 134a.

Each of the first leakage detection material 134a and the second leakage detection material 135a are made of a material that is changed in color when the electrolyte is in contact therewith. Preferably, each of the first leakage detection material 134a and the second leakage detection material 135a is made of methyl orange.

### Accommodation process

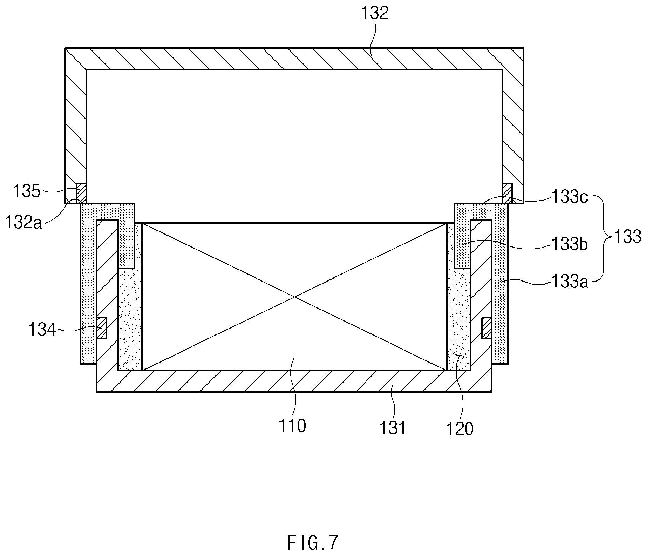

In the accommodation process (S30), referring to FIG. 7, the electrode assembly 110 and the electrolyte 120 are accommodated in the lower can 131, and thus, the electrolyte 120 is impregnated into the electrode assembly 110.

### Disposition process

In the disposition process (S40), the gasket 133 is disposed on an upper portion of the lower can 131. Here, the gasket 133 comprises an outer part 131 supported on an outer circumferential surface of the lower can 131, an inner part 133b supported on an inner circumferential surface of the lower can 131, and a connection part 133c connecting the outer part 133a to the inner part 133b.

### Clamping process

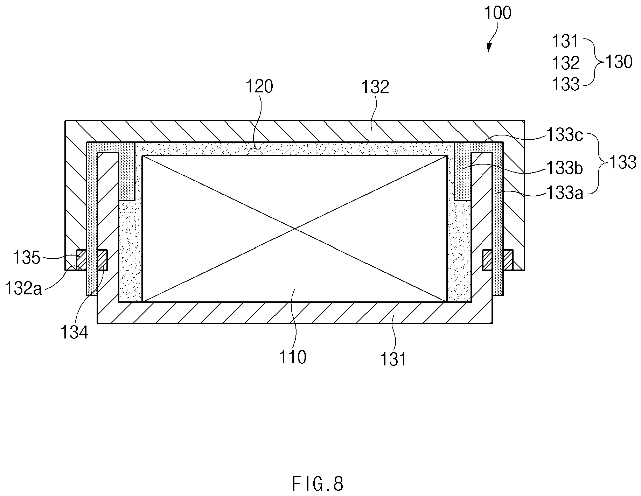

Referring to FIG. 8, in the clamping process (S50), the upper can 132 is disposed on the lower can 131, and then, the lower can 131 and the upper can 132 are clamped. Therefore, the button-type secondary battery 100 may be manufactured.

After the clamping process, a thermal fusion process (S60) may be further performed.

### Thermal fusion process

In the thermal fusion process (S60), heat having a set temperature is applied to an outer circumferential surface of the button-type secondary battery 100. Then, the first leakage detection material 134a and the gasket 133 or the second leakage detection material 135a and the gasket 133 are thermally fused to be integrated with each other, thereby significantly increasing in adhesion strength of the gasket 133.

Here, the temperature in the set range may be 240°C to 300°C, preferably 260°C to 280°C.

In the button-type secondary battery 100 manufactured as described above, adhesion and sealing force may increase through adhesion between the gasket 133 and the first leakage detection member or the gasket 133 and the second leakage detection member, and whether the electrolyte leaks may be easily checked.

Hereinafter, in descriptions of another embodiment of the present invention, constituents having the same function as the above-mentioned embodiment have been given the same reference numeral in the drawings, and thus duplicated description will be omitted.

### [Button-type secondary battery according to second embodiment of the present invention]

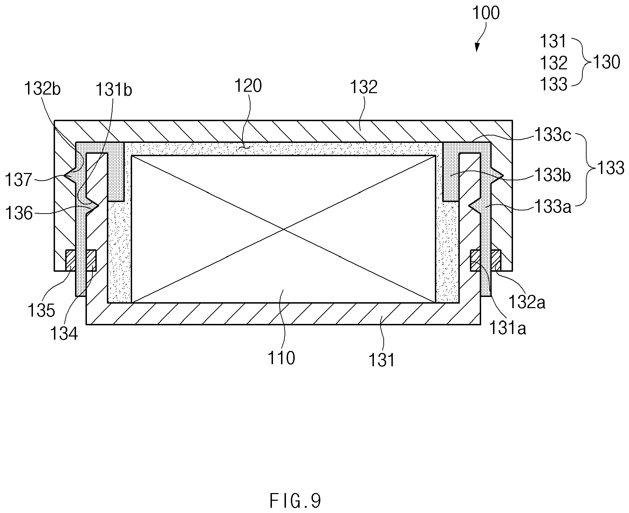

In the button-type secondary battery 100 according to the second embodiment of the present invention, as illustrated in FIG. 9, a recessed lower insertion groove 131b and a recessed upper insertion groove 132b may be formed in a surface of the lower can 131 and a surface of the upper can 132, which are in close contact with the gasket 133, respectively.

Here, the lower insertion groove 131b and the upper insertion groove 132b are disposed to be spaced apart from each other so as not to face each other when viewed in a state in which the lower can 131 and the upper can 132 are coupled to each other.

In the button-type secondary battery 100, which has the above-described structure, according to the second embodiment of the present invention, when the lower can 131 and the upper can 132 are clamped, a portion of the gasket 133 may be introduced (inserted) into the lower insertion groove 131b and the upper insertion groove 132b to form a lower insertion protrusion 136 and an upper insertion protrusion 137 on the surface of the gasket 133, respectively. Thus, the adhesion between the lower can 131 and the gasket 133 may increase by the lower insertion protrusion 136 to increase in adhesion and coupling force. In addition, a contact area between the upper can 132 and the gasket 133 may increase by the upper insertion protrusion 137 to increase in adhesion and coupling force.

The clamping refers to press-fitting or clamping two objects.

Particularly, the lower insertion groove 131b and the upper insertion groove 132b are disposed in the lower can 131 and the upper can 132 and spaced apart from each other so as not to face each other. Thus, the lower insertion protrusion 136 and the upper insertion protrusion 137 formed on the surface of the gasket 133 are spaced apart from each other so as not to face each other. As a result, an amount of insertion of the gasket 133, which is inserted into each of the lower insertion groove 131b and the upper insertion groove 132b, may be sufficiently secured. Thus, since the amount of insertion of the gasket, which is inserted into the lower insertion groove 131b and the upper insertion groove 132b, is sufficiently secured, the lower insertion protrusion 136 and the upper insertion protrusion 137 may be stably formed, and as a result, the adhesion and the coupling force between the lower can 131 and the upper can 132 may increase.

Here, the lower insertion protrusion 136 may be provided to adhere to the lower insertion groove 131b, and the upper insertion protrusion 137 may be provided to adhere to the upper insertion groove 132b. Thus, the coupling force between the lower insertion protrusion 136 and the lower insertion groove 131b may increase, and the coupling force between the upper insertion protrusion 137 and the upper insertion groove 132b may increase.

In addition, two or more lower insertion grooves or two or more upper insertion grooves may be provided to be connected to each other, and thus, a plurality of lower insertion protrusions and a plurality of upper insertion protrusions may be formed on the surface of the gasket, and as a result, the adhesion and sealing force between the lower can and the gasket and between the upper can and the gasket may significantly increase.

The two or more lower insertion grooves 131b and the two or more upper insertion grooves 132b are spaced apart from each other so as not to face each other.

Accordingly, the scope of the present invention is defined by the appended claims more than the foregoing description and the exemplary embodiments described therein. Various modifications made within the meaning of an equivalent of the claims of the invention and within the claims are to be regarded to be in the scope of the present invention.

### [Description of the Symbols]

100: Button-type secondary battery
110: Electrode assembly
120: Electrolyte
130: Can assembly
131: Lower can
131a: Lower coupling groove
131b: Lower insertion groove
132: Upper can
132a: Upper coupling groove
132b: Upper insertion groove
133: Gasket
134: First leakage detection member
134a: First leakage detection material
134b: First adhesive material
135: Second leakage detection member
135a: Second leakage detection material
135b: Second adhesive material
136: Lower insertion protrusion
137: Upper insertion protrusion

## Claims

1. A button-type secondary battery comprising:
a can assembly configured to accommodate an electrode assembly and an electrolyte,
wherein the can assembly comprises:
a lower can configured to accommodate the electrode assembly and the electrolyte and serve as a first electrode terminal;
an upper can coupled to surround the lower can and configured to serve as a second electrode terminal; and
a gasket provided between the lower can and the upper can to seal a gap between the lower can and the upper can,
wherein a first leakage detection member configured to detect whether the electrolyte leaks is provided on an outer surface of the lower can that is in close contact with the gasket, and
the first leakage detection member is provided with a recessed lower coupling groove formed in the outer surface of the lower can.

2. The button-type secondary battery of claim 1, wherein the first leakage detection member is provided in the lower coupling groove and comprises a first leakage detection material configured to detect leakage of the electrolyte passing between the gasket and the lower coupling groove of the lower can and a first adhesive material configured to allow the first leakage detection material to adhere to the lower coupling groove so as to fix the first leakage detection material.

3. The button-type secondary battery of claim 2, wherein a second leakage detection member is provided on an end of an inner surface of the upper can that is in close contact with the gasket, and
the second leakage detection member is provided with a recessed upper coupling groove formed in the end of the inner surface of the upper can.

4. The button-type secondary battery of claim 3, wherein the second leakage detection member is provided in the upper coupling groove and comprises a second leakage detection material configured to detect leakage of the electrolyte passing between the gasket and the upper coupling groove of the upper can and a second adhesive material configured to allow the second leakage detection material to adhere to the upper coupling groove so as to fix the second leakage detection material.

5. The button-type secondary battery of claim 4, wherein the first leakage detection material and the gasket or the second leakage detection material and the gasket are heated to a set temperature and thermally fused to be integrated with each other.

6. The button-type secondary battery of claim 4, wherein the upper coupling groove is provided to be opened in a direction the end of the upper can so that a portion of the second leakage detection material provided in the upper coupling groove is exposed to the outside.

7. The button-type secondary battery of claim 1, wherein a recessed lower insertion groove and a recessed upper insertion groove are formed in a surface of the lower can and a surface of the upper can, which are in close contact with the gasket, respectively, and
the lower insertion groove and the upper insertion groove are spaced apart from each other so as not to face each other.

8. The button-type secondary battery of claim 7, wherein a portion of the gasket is introduced into each of the lower insertion groove and the upper insertion groove by clamping of the lower can and the upper can to form a lower insertion protrusion and an upper insertion protrusion on a surface of the gasket,
a contact area between the lower can and the gasket increases by the lower insertion protrusion, and
a contact area between the upper can and the gasket increases by the upper insertion protrusion.

9. A method for manufacturing a button-type secondary battery, the method comprising:
a preparation process of preparing a lower can, in which a recessed lower coupling groove is formed, an upper can, in which a recessed upper coupling groove is formed, and a gasket disposed between the lower can and the upper can, wherein the lower coupling groove is formed in an outer surface of the lower can that is in close contact with the gasket, and the upper coupling groove is formed in an end of an inner surface of the upper can that is in close contact with the gasket;
an insertion process of inserting a first leakage detection member into the lower coupling groove and a second leakage detection member into the upper coupling groove;
an accommodation process of accommodating an electrode assembly and an electrolyte in the lower can;
a disposition process of disposing the gasket on an upper portion of the lower can, wherein the gasket comprises an outer part supported on an outer circumferential surface of the lower can, an inner part supported on an inner circumferential surface of the lower can, and a connection part connecting the outer part to the inner part; and
a clamping process of disposing the upper can on the lower can to clamp the lower can and the upper can, thereby manufacturing the button-type secondary battery,
wherein, in the clamping process, the first leakage detection member and the second leakage detection member are in close contact with both surfaces of the gasket by the clamping of the lower can and the upper can, respectively.

10. The method of claim 9, wherein, in the insertion process, the first leakage detection member comprises a first leakage detection material detecting leakage of the electrolyte passing between the gasket and the lower coupling groove of the lower can and a first adhesive material allowing the first leakage detection material to adhere to the lower coupling groove to fix the first leakage detection material, and
the second leakage detection member is provided in the upper coupling groove and comprises a second leakage detection material detecting leakage of the electrolyte passing between the gasket and the upper coupling groove of the upper can and a second adhesive material allowing the second leakage detection material to adhere to the upper coupling groove to fix the second leakage detection material.

11. The method of claim 10, further comprising, after the clamping process, a thermal fusion process of applying heat having a set temperature to an outer circumferential surface of the button-type secondary battery to thermally fuse the first leakage detection material and the gasket or the second leakage detection material and the gasket so as to be integrated with each other.
